# EUROPÄISCHE PATENTSCHRIFT

(11) **EP 1 149 446 B1**
(45) Veröffentlichungstag und Bekanntmachung des Hinweises auf die Patenterteilung: **27.11.2002**
(21) Anmeldenummer: 00904854.7
(22) Anmeldetag: 25.01.2000
(51) Int. Cl.: H02B 13/035

(54) **GEKAPSELTER HOCHSPANNUNGS-LEISTUNGSSCHALTER IN HORIZONTAL LIEGENDER BAUWEISE**
HORIZONTALLY POSITIONED, ENCAPSULATED HIGH-VOLTAGE CIRCUIT BREAKER
DISJONCTEUR HAUTE TENSION ENCAPSULE POUR COURANT TRIPHASE A CONSTRUCTION HORIZONTALE

(30) Priorität: 28.01.1999 DE 29902208 U
(43) Veröffentlichungstag der Anmeldung: 31.10.2001
(73) Patentinhaber: SIEMENS AKTIENGESELLSCHAFT, 80333 München (DE)
(72) Erfinder: MEINHERZ, Manfred, D-13467 Berlin (DE); RAETH, Bernd, D-16727 Baerenklau (DE); BRUCHMANN, Bernd, D-12353 Berlin (DE)
(86) Internationale Anmeldenummer: DE0000250
(87) Internationale Veröffentlichungsnummer: WO00045487

(56) Entgegenhaltungen:
- US-A- 4 019 007
- US-A- 4 968 875

## Beschreibung

Die Erfindung liegt auf dem Gebiet der Verteilung von elektrischer Energie und ist bei der konstruktiven Gestaltung eines dreiphasig gekapselten, gasisolierten Hochspannungs-Leistungsschalter anzuwenden, bei dem innerhalb eines horizontal liegend angeordneten rohrförmigen Schaltergehäuses drei Leistungsschalter-Pole nebeneinander angeordnet sind und bei dem den bewegbaren Kontaktstücken der Leistungsschalter-Pole eine gemeinsame, außerhalb des Schaltergehäuses angeordnete Antriebseinrichtung zugeordnet ist. - Die Erfindung ist auch bei einem einphasig gekapselten Hochspannungs-Leistungs-Schalter anzuwenden.

Bei einem bekannten dreiphasig gekapselten Hochspannungs-Leistungsschalter sind die drei Leistungsschalter-Pole in einem ovalen oder zylindrischen Gehäuse nebeneinander entweder in einer horizontalen Ebene oder an den Enden eines Dreiecks angeordnet und jeweils mittels eines Tragzylinders aus isolierendem Material an einem Stirnende des Gehäuses fixiert. Die Ableitungen der drei Phasen sind durch Gehäusestutzen herausgeführt, die im Mantelbereich des Gehäuses angeordnet sind. Die Ableitung der mittleren Phase ist in einer vertikalen Ebene angeordnet, während die Ableitungen der beiden anderen Phasen beidseitig dazu angeordnet sind und untereinander einen spitzen, nach oben offenen Winkel bilden. Auf jeden Anschlußstutzen , der von einem Stromwandler umgeben ist, ist ein Rohrstück aufgesetzt, in dem sich ein Trennerschalter, gegebenenfalls in Kombination mit einem Erdungsschalter, befindet. An dieses Rohrstück schließt sich eine Freileitungsdurchführung an. - Der Antrieb des Hochspannungs-Leistungsschalters ist an dem einen Ende des Gehäuses angeordnet, wobei eine vertikal verlaufende Antriebsstange eine lineare Bewegung über ein Umlenkgetriebe auf eine Torsionsachse überträgt, die mit weiteren Umlenkgetrieben mit horizontal verlaufenden Antriebsstangen gekuppelt ist. Diese Antriebsstangen sind an die bewegbaren Kontakte der Leistungsschalter-Pole gekoppelt (EP 0878 816 A2).

Bei einem anderen bekannten Hochspannungs-Leistungsschalter der genannten Art sind die Leistungsschalter-Pole im Bereich der Stirnenden des Schaltergehäuses über die zu den Polen führenden Phasenleiter an Tragisolatoren aufgehängt, die sich an mantelseitig angeordneten Anschlußstutzen abstützen. Den Phasenleitern können dabei Stromwandler zugeordnet sein; auf den einen Anschlußstutzen ist direkt ein Aufteilungsbaustein aufgesetzt, der drei Freiluftdurchführungen trägt, während auf den anderen Anschlußstutzen zunächst ein Anbaugehäuse aufgesetzt ist, welches einen Trennschalter enthält und mit einem Schnellerder sowie einem Spannungswandler bestückt ist (EP 0878 816 A2).

Es ist weiterhin ein dreiphasig gekapselter, gasisolierter Hochspannungs-Leistungsschalter in stehender Bauweise vorgeschlagen worden, bei dem jeder Leistungsschalter-Pol aus zwei Polstücken besteht, die sich am unteren und am oberen Ende des Gehäuses mittels Isolierstützern an jeweils einem Tragkörper abstützen. Die Isolierstützer sind als Rohre ausgebildet, wobei die Rohre der oberen Polstücke von jeweils einer Antriebsstange durchsetzt sind. Die an ihrem einen Ende mit Schaltstangen gelenkig verbundenen Antriebsstangen sind an ihrem anderen Ende mit einer Traverse starr verbunden, die ihrerseits an einen Antriebshebel angelenkt ist. Dieser Antriebshebel ist mit einer Kurbel verbunden, die durch einen Antrieb schwenkbar ist (DE 198 15 152 C2).

Für einphasig gekapselte Freiluft-Hochspannungs-Schalteinrichtungen ist weiterhin ein Hochspannungs-Leistungsschalter bekannt, bei dem einem liegend angeordneten, rohrförmigen Kapselungsgehäuse, welches zwei Unterbrechereinheiten enthält, sich beidendig stirnseitig anschließende, einen Stromwandler tragende Kapselungsbausteine zügeordnet sind. Der bewegbare Kontakt der jeweiligen Unterbrechereinheit stützt sich über einen hohlen Isolierzylinder am Mantel des Kapselungsgehäuses ab, wobei eine isolierende Antriebsstange den Isolierzylinder durchdringt und an die unterhalb des Schaltergehäuses angeordnete Antriebseinrichtung angekoppelt ist (DE 2929054 A1).

Ausgehend von einem dreiphasig gekapselten Hochspannungs-Leistungsschalter in horizontal liegender Bauweise mit den Merkmalen des Oberbegriffes des Patentanspruches 1 (EP 0878 816 A2) liegt der Erfindung die Aufgabe zugrunde, den Schalter so auszugestalten, dass er bei kompakter Bauweise eine möglichst geringe Bauhöhe aufweist und eine möglichst geringe Stellfläche benötigt.

Zur Lösung dieser Aufgabe ist gemäß der Erfindung vorgesehen, dass die beiden stirnseitigen Enden des rohrförmigen Schaltergehäuses jeweils mit einem Anschlußflansch zum horizontalen Anschluß eines Anbaugehäuses versehen sind,
dass weiterhin die Antriebseinrichtung an der Mantelfläche des Schaltergehäuses angeordnet und an einem Montageflansch im Mantelbereich des Schaltergehäuses befestigt ist, dass außerdem jedes Pol-Teilstück eines Leistungsschalter-Poles über jeweils einen Isolierstützer am Mantel des rohrförmigen Schaltergehäuses abgestützt ist und dass schließlich die Iso-lierstützer für die die bewegbaren Kontaktstücke enthaltenden Pol-Teilstücke als Durchführungen für mit der Antriebseinrichtung verbundene Koppelelemente der Hebelgetriebe ausgebildet sind; dabei weist jedes Hebelgetriebe einen zweiarmigen Umlenkhebel auf, dessen Drehlager über den Isolierstützer am Mantel des Schaltergehäuses abgestützt ist.

Diese Ausgestaltung des Leistungsschalters sieht also vor, die rohrförmige Gestalt des Schaltergehäuses möglichst wenig zu verändern und die dem Leistungsschalter zuzuordnenden Komponenten einzelnen Anbaugehäusen zuzuordnen, die sich stirnseitig in horizontaler Richtung an das Schaltergehäuse anschließen. Dadurch baut der Schalter nicht in die Höhe, was für Wartungsarbeiten günstig ist. Die stirnseitige Anordnung der Anbaugehäuse ist mit einer mantelseitigen Abstützung der Leistungsschalter-Pole sowie einer mantelseitigen Zuordnung der Antriebseinrichtung verknüpft. Die mantelseitige Abstützung der Leistungsschalter-Pole ist dabei mit dem Kraftübertragungsweg der Hebelgetriebe der Antriebseinrichtung derart kombiniert, dass die Antriebseinrichtung unter dem Schaltergehäuse angeordnet werden kann und damit keinen die Stellfläche des Schaltergehäuses überragenden Raum beansprucht.

Die kompakte Bauweise des neuen Leistungsschalters wird unterstützt, wenn die beiden dem Schaltergehäuse beidendig zugeordneten Anbaugehäuse, die jeweils einen ersten, dem Schaltergehäuse zugewandten und einen koaxial dazu angeordneten zweiten, dem Schaltergehäuse abgewandten Anschlußflansch aufweisen, so gestaltet sind, dass der zweite Anschlußflansch wenigstens eines der beiden Anbaugehäuse einen Durchmesser aufweist, der kleiner als der Durchmesser des ersten Anschluß- flansches ist. Diese Anbaugehäuse dienen dann als Übergangsstücke von dem relativ großen Außendurchmesser des Schaltergehäuses auf weitere Anbaugehäuse, die in aller Regel einen kleineren Außendurchmesser aufweisen können. Wenigstens eines der Übergangsstücke kann dabei als Stromwandlerbaustein ausgebildet sein, wie es an sich aus der DE-U-298 06 652 bekannt ist.

Die Abstützung der Isolierstützer am Mantel des Schaltergehäuses erfolgt für die die bewegbaren Kontaktstücke enthaltenden Polteilstücke in weiterer Ausgestaltung der Erfindung dadurch, dass diese Isolierstützer auf eine Traverse aufgesetzt sind, die sich im Bereich des Montageflansches am Mantel des Schaltergehäuses abstützt. Um dabei den durch die Isolierstützer hindurchgeführten Koppelelementen der Hebelgetriebe einen gemeinsamen Antrieb zuordnen zu können, sind die Koppelelemente unterhalb der genannten Traverse zweckmäßig an ein Joch angelenkt, das über eine Antriebsstange mit der Antriebseinrichtung verbunden ist.

Um die Umlenkung der Kraftflusses von den vertikal verlaufenden Koppelelementen auf die horizontal verlaufenden Antriebsstangen der bewegbaren Kontaktstücke der Leistungsschalter-Pole mit Hilfe der zweiarmigen Umlenkhebel möglichst raumsparend vornehmen zu können, ist in weiterer Ausgestaltung der Erfindung der abtriebsseitige Hebelarm der Umlenkhebels über ein schwenkbar gelagertes Koppelelement an ein axial geführtes Koppelelement angelenkt, das in Bewegungsrichtung der bewegbaren Kontaktstücke gleitend geführt und an das bewegbare Kontaktstück angekoppelt ist.

Um das elektrische Feld innerhalb des Schaltergehäuses durch das Hebelgetriebe möglichst wenig zu beeinträchtigen, ist es zweckmäßig, jedes ein bewegbares Kontaktstück enthaltendes Pol-Teilstück als Gehäuse auszubilden, das den Umlenkhebel und das axial geführte Koppelelement umgibt und auf den zugehörigen Isolierstützer aufgesetzt ist und in dessen Wandung der jeweilige Umlenkhebel gelagert ist. Ein solches Gehäuse kann mit einer äußeren Kontur versehen werden, die dem wünschenswerten Verlauf des elektrischen Feldes Rechnung trägt.

Bei Hochspannungs-Leistungsschaltern sind die beiden Pol-Teilstücke eines Leistungsschalter-Poles üblicherweise über ein einen isolierenden Abstandhalter bildendes Isolierrohr mechanisch miteinander verbunden. In weiterer Ausgestaltung der Erfindung kann ein solches Isolierrohr durch wenigstens eine parallel zur Achse der Polteilstücke verlaufende Stange ersetzt werden. Dies ist möglich, weil durch die radiale Abstützung der Pol-Teilstücke am Mantel des Gehäuses der Abstandhalter nur in geringem Maße eine Tragfunktion übernimmt. Die Ausgestaltung des Abstandhalters als eine oder zwei Stangen begünstigt eine gegenseitige Zuordnung der Leistungsschalter-Pole auf möglichst engem Raum.

Die gemäß der Erfindung vorgesehene Ausgestaltung der Leistungsschalter-Pole und des Antriebsweges für die bewegbaren Kontaktstücke kann auch bei einphasig gekapselten Leistungsschaltern zur Anwendung kommen. Da in diesem Fall das Schaltergehäuse nur einen Leistungsschalter-Pol enthält, kann im Bereich des Antriebsweges die Verwendung einer Traverse und eines Joches entfallen.

Zwei Ausführungsbeispiele der Erfindung sind in den Figuren 1 bis 5 dargestellt.

Dabei zeigt
Figur 1 eine Ansicht eines dreipoligen Leistungsschalters, in der der Kraftübertragungsweg der Antriebseinrichtung dargestellt ist,
Figur 2 eine perspektivische Ansicht von zwei der drei in einem Schaltergehäuse angeordneten Leistungsschalter-Pole,
Figur 3 einen Längsschnitt durch den mittleren Leistungsschalter-Pol und
Figur 4 die Ankopplung des in einem Pol-Teilstück gelagerten Umlenkhebels an die Schaltstange eines Leistungsschalter-Poles.
Figur 5 zeigt einen einphasig gekapselten Leistungsschalter.

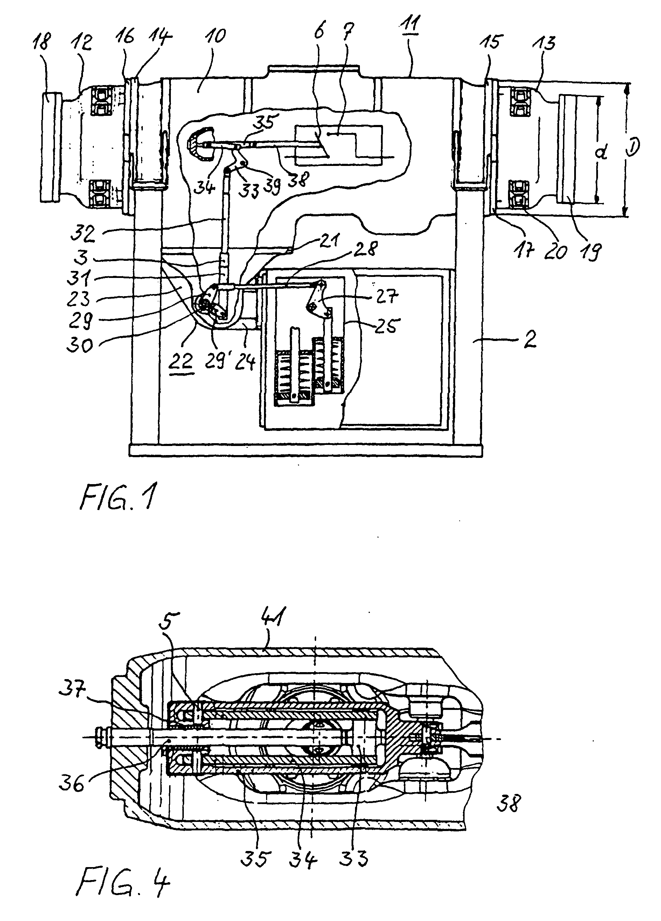

Figur 1 zeigt die Ansicht eines Hochspannungs-Leistungs-Schalters, dessen Schaltergehäuse 11 partiell aufgeschnitten ist, um den Antriebsweg der Kraftübertragung von einer Antriebseinrichtung auf den bewegbaren Schaltkontakt eines Leistungsschalterpoles darzustellen. Das Schaltergehäuse 11 ist rohrförmig gestaltet und auf einem Gestell 2 angeordnet. Das horizontal liegend angeordnete Schaltergehäuse ist an seinen beiden Enden mit Anschlußflanschen 14 und 15 versehen, an die ein erstes Anbaugehäuse 12 und an zweites Anbaugehäuse 13 angeflanscht sind. Die Anbaugehäuse 12 und 13 weisen erste Anschlußflansche 16 und 17 sowie zweite Anschlußflansche 18 und 19 auf, wobei die Durchmesser d der zweiten Anschlußflansche 18 und 19 kleiner als die Durchmesser D der ersten Anschlußflansche 16 und 17 gewählt sind. Eines oder beide Anbaugehäuse können als Stromwandlerbausteine ausgebildet sein, wie es an sich aus der Deutschen Gebrauchsmusterschrift 298 05 944 U bekannt ist, und hierzu Stromwandler aufnehmen, die mit Sekundäranschlüssen 20 versehen sind.

Das Schaltergehäuse 11 ist im Bereich seiner Mantelfläche 10 weiterhin mit einem Montageflansch 21 versehen, an den die Antriebseinrichtung 22 angeflanscht ist. Diese weist unter anderem ein Getriebegehäuse 23 mit einem Anschlußbock 24 und ein an dem Anschlußbock befestigtes Antriebsgehäuse 25 auf, in dem sich ein Federantrieb 26 mit Ein- und Ausschaltfeder befindet. Der Federantrieb 26 ist über eine nicht näher bezeichnete Koppelstange an den einen Arm eines zweiarmigen Umlenkhebels 27 angelenkt. Der andere Arm dieses Umlenkshebels ist über eine Koppelstange 28 an einen Hebel 29 angelenkt, der auf einer in dem Getriebegehäuse 23 gelagerten Umlenkwelle 30 aufsitzt. Auf dieser Umlenkwelle 30 sitzt im Inneren des Getriebegehäuses ein weiterer Umlenkhebel 29' auf, an den die vertikal verlaufende Antriebsstange 31 angelenkt ist. Diese Antriebsstange trägt - wie später anhand von Figur 2 näher erläutert wird - ein Joch 3, auf das drei vertikal verlaufende Koppelelemente 32 aufgesetzt sind. Je eines dieser Koppelelemente arbeitet auf jeweils eine Antriebsstange der drei in dem Schaltergehäuse 11 angeordneten Leistungsschalter-Pole. Hierzu ist das jeweilige Koppelelement 32 an den einen Arm eines zweiarmigen Umlenkhebels 33 angelenkt, an dessen anderen Arm ein weiteres Koppelelement 34 angelenkt ist. Das Koppelelement 34 ist mit seinem anderen Ende schwenkbar am ersten Polteilstück 41 eines Leistungsschalter-Poles gelagert und dort - wie später anhand der Figur 4 beschrieben - axial geführt und über ein axial geführtes Koppelelement 35 an die Antriebsstange 38 eines bewegbaren Schaltkontaktes 6 angelenkt.

Gemäß Figur 2 sind in dem Schaltergehäuse 11 in einer horizontalen Ebene nebeneinander drei Leistungsschalter-Pole 40 angeordnet, wobei in dieser Figur nur zwei Leistungsschalter-Pole dargestellt sind. Jeder Leistungsschalter-Pol weist ein erstes Pol-Teilstück 41 und ein zweites Pol-Teilstück 42 auf, die mittels isolierender Abstandhalter 43 in Form von Isolierstangen mechanisch miteinander verbunden sind. An jedes Pol-Teilstück ist ein Stromleiter 50 angeschlossen, wobei zum Übergang vom jeweiligen Pol-Teilstück auf einen Stromleiter L-förmig gestaltete Leiterstücke 49 vorgesehen sind. - Während die Leistungsschalter-Pole in einer Ebene nebeneinander angeordnet sind, sind die Stromleiter 50 im Dreieck angeordnet.

Die Pol-Teilstücke 41 und 42 stützen sich im Mantelbereich des Schaltergehäuses 11 über Isolierstützer 44 bzw. 45 ab, die an ihrem hochspannungsseitigem Ende und an ihrem gehäuseseitigen Ende jeweils mit einem Feldsteuerelement 46 bzw. 47 versehen sind. Die Isolierstützer 44 für die ersten Pol-Teilstücke ruhen auf einer Traverse 48, die sich ihrerseits im Bereich des Montageflansches 21 am Schaltergehäuse 11 abstützt. Die Isolierstützer 45 der zweiten Pol-Teilstücke stützen sich jeweils einzeln im Mantelbereich des Schaltergehäuses 11 ab. Hierbei sind sowohl die Pol-Teilstücke 41 und 42 als auch die Isolierstützer 44 und 45 sowie die Steuerelemente 46 und 47 jeweils gleich ausgebildet.- Bei Anordnung der Leistungsschalter-Pole im Dreieck würden unterschiedlich lange Isolierstützer und Koppelelemente zur Anwendung kommen.

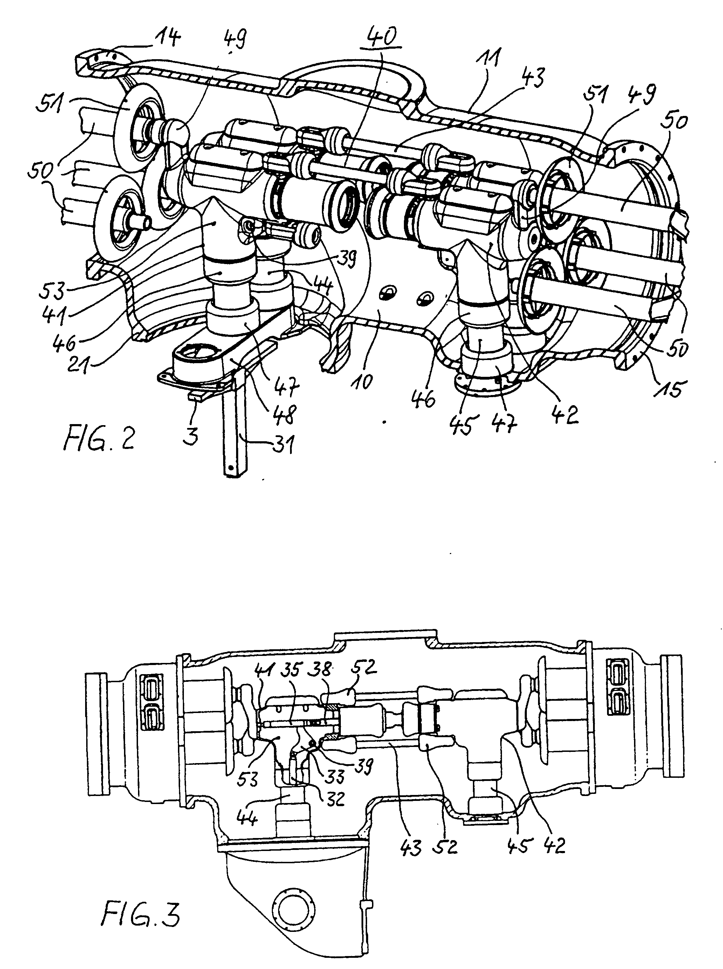

Der Traverse 48 ist das Joch 3 zugeordnet, das sich am Ende der Antriebsstange 31 befindet. Das Joch 3 trägt die Koppelelemente 32, von denen sich gemäß Figur 3 jeweils eines durch einen hohl ausgebildeten Isolierstützer 44 hindurch erstreckt und an den einen Arm des Umlenkhebels 33 angelenkt ist. Der zweiarmige Hebel 33 ist über eine Welle 39' in der Wand 53 des gehäuseartig ausgebildeten ersten Pol-Teilstück 41 gelagert. Der andere Arm des Umlenkhebels 33 ist an ein laschenartiges, schwenkbares Koppelelement 34 angelenkt, das gemäß Figur 4 über Buchsen 52 an einem gabelartigen, axial geführten Koppelelement 35 gelagert ist. Das axial geführte Koppelelement 35 sitzt über eine Gleitbuchse 37 auf einer Führungsstange 36 auf, die am gehäuseartigen ersten Pol-Teilstück 41 befestigt ist und sich innerhalb dieses Pol-Teilstückes horizontal erstreckt. - Am anderen Ende des auf der Führungsstange gleitbar angeordneten, axial geführten Koppelelementes 35 ist die Antriebsstange 38 angelenkt, mit der der bewegbare Schaltkontakt 6 (s. Figur 1) des Leistungsschalter-Poles bewegt wird.

Figur 3 zeigt zusätzlich deutlich die stangenartigen isolierenden Abstandhalter 43, denen an ihren Enden Abschirmelektroden 52 zugeordnet sind.

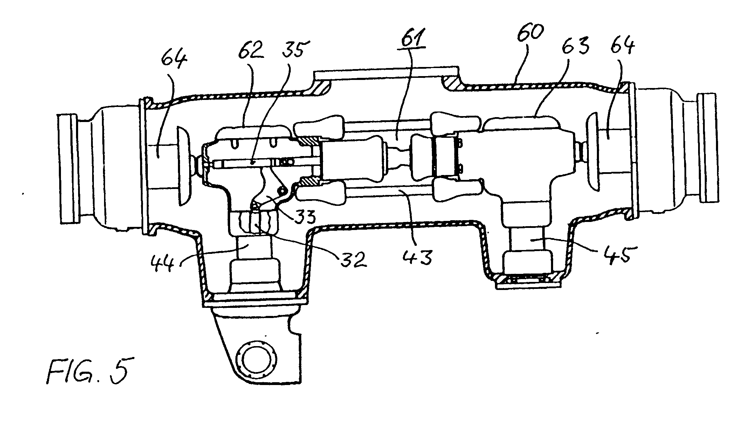

Der Leistungsschalter gemäß Figur 5 ist im Prinzip gleichartig aufgebaut wie der Leistungsschalter gemäß den Figuren 1 bis 4. Der wesentliche Unterschied ist darin zu sehen, dass das Schaltergehäuse 60 nur einen Leistungsschalter-Pol 61 enthält, dessen Pol-Teilstücke 62 und 63 jeweils an einen axial verlaufenden Stromleiter 64 angeschlossen sind. Zur Abstützung des Pol-Teilstückes 62 am Mantel des Schaltergehäuses bedarf es keiner Traverse, so dass diese Abstützung ähnlich wie Abstützung des Pol-Teilstückes 63 erfolgen kann. Weiterhin bedarf es keines Joches, um das Koppelelement 32 an die Antriebsstange (Teil 31 in Figur 1) anzukoppeln.

## Patentansprüche

1. Drei-phasig gekapselter Hochspannungs-Leistungsschalter in horizontal liegender Bauweise,
bei dem jeder der drei innerhalb eines rohrförmigen Schaltergehäuses nebeneinander angeordneten Leistungsschalter-Pole (40) aus zwei gegenüber dem Schaltergehäuse (11) isoliert angeordneten Pol-Teilstücken besteht, von denen das eine, am Schaltergehäuse isolierend abgestützte Pol-Teilstück (41) das bewegbare Kontaktstück (6) und das andere Pol-Teilstück (42) das feststehende'Kontaktstück (7) trägt,
bei dem weiterhin den bewegbaren Kontaktstücken der Leistungsschalter-Pole eine gemeinsame, außerhalb des Schaltergehäuses angeordnete Antriebseinrichtung (22, 26) zugeordnet ist, die innerhalb des Schaltergehäuses über getrennte Hebelgetriebe (29', 31, 3, 32, 33, 34, 35) an die bewegbaren Kontaktstücke angekoppelt ist,
und bei dem im Bereich der Stirnenden des Schaltergehäuses Anbaugehäuse (12, 13) vorgesehen sind, durch welche die Stromzuführungen (50) zu den Leistungsschalter-Polen hindurchgeführt sind,
**dadurch gekennzeichnet,**
**dass** die beiden stirnseitigen Enden des Schaltergehäuses jeweils mit einem Anschlußflansch (14, 15) zum horizontalen Anschluß eines Anbaugehäuses (12, 13) versehen sind,
**dass** die Antriebseinrichtung (22, 26) an der Mantelfläche des Schaltergehäuses (11) angeordnet und an einem Montageflansch (21) im Mantelbereich des Schaltergehäuses befestigt ist, dass jedes Pol-Teilstück (41, 42) eines Leistungsschalter-Poles über jeweils einen Isolierstützer (44, 45) am Mantel (10) des rohrförmigen Schaltergehäuses (11) abgestützt ist und dass die Isolierstützer (44) für die die bewegbaren Kontaktstücke enthaltenden Pol-Teilstücke (41) als Durchführungen für mit der Antriebseinrichtung verbundene Koppelelemente-(32) der Hebelgetriebe ausgebildet sind,
wobei jedes Hebelgetriebe einen zweiarmigen Umlenkhebel (33) aufweist, dessen Drehlager (33) über den Isolierstützer (44) am Mantel (10) des schaltergehäuses (11) abgestützt ist.

2. Hochspannungs-Leistungsschalter nach Anspruch 1, bei dem jedes Anbaugehäuse (12, 13) einen ersten, dem Schaltergehäuse (11) zugewandten und einen zweiten, dem Schaltergehäuse (11) abgewandten Anschlußflansch (16, 17, 18, 19) aufweist,
**dadurch gekennzeichnet,**
**dass** der zweite Anschlußflansch (18, 19) wenigstens eines der beiden Anbaugehäuse einen Durchmesser (d) aufweist, der kleiner als der Durchmesser (D) des ersten Anschlußflansches (16, 17) ist,
und **dass** dieses Anbaugehäuse (12, 13) als Stromwandlerbaustein ausgebildet ist.

3. Hochspannungs-Leistungsschalter nach Anspruch 1 oder 2
**dadurch gekennzeichnet,**
**dass** die Isolierstützer (44) für die die bewegbaren Kontaktstücke enthaltenden Pol-Teilstücke auf eine Traverse (48) aufgesetzt sind, die sich im Bereich des Montageflansches (21) am Mantel (10) des Schaltergehäuses (11) abstützt.

4. Hochspannungs-Leistungsschalter nach Anspruch 3
**dadurch gekennzeichnet,**
**dass** die Koppelelemente (32) der Hebelgetriebe unterhalb der Traverse (48) an ein Joch (3) angelenkt sind, das über eine Antriebsstange (31) mit der Antriebseinrichtung (26, 27, 28, 29) verbunden ist.

5. Hochspannungs-Leistungsschalter nach Anspruch 4
**dadurch gekennzeichnet,**
**dass** jedes Koppelelement (32) an den einen Hebelarm des zugehörigen zweiarmigen Umlenkhebels (33) angelenkt ist
und **dass** der andere Hebelarm des Umlenkhebels (33) über ein schwenkbar gelagertes Koppelelement (34) an ein axial geführtes Koppelelement (35) angelenkt ist, wobei das axial geführte Koppelelement (35) in Bewegungsrichtung des bewegbaren Kontaktstückes (6) gleitend (37) geführt und an das bewegbare Kontaktstück (6) angekoppelt ist.

6. Hochspannungs-Leistungsschalter nach Anspruch 5
**dadurch gekennzeichnet,**
**dass** jedes ein bewegbares Kontaktstück enthaltendes Pol-Teilstück (41) als Gehäuse ausgebildet ist, das den Umlenkhebel (33) und das axial geführte Koppelelement (35) umgibt und in dessen Wandung (53) der jeweilige Umlenkhebel gelagert (39) ist und das auf den zugehörigen Isolierstützer (44) aufgesetzt ist.

7. Hochspannungs-Leistungsschalter nach einem der Ansprüche 1 bis 6
**dadurch gekennzeichnet,**
**dass** die ein feststehendes Kontaktstück (7) enthaltenden Pol-Teilstücke (42) gleichartig wie die ein bewegbares Kontaktstück (6) enthaltenden Pol-Teilstücke (41) ausgebildet sind.

8. Hochspannungs-Leistungsschalter nach einem der Ansprüche 1 bis 7
**dadurch gekennzeichnet,**
**dass** die Pol-Teilstücke (41, 42) eines Leistungsschalter-Poles (40) mittels eines isolierenden Abstandhalters mechanisch miteinander verbunden sind, wobei der isolierende Abstandhalter aus wenigstens einer parallel zur Achse der Polteilstücke verlaufenden Stange (43) besteht.

9. Hochspannungs-Leistungsschalter nach einem der Ansprüche 1 bis 8
**dadurch gekennzeichnet,**
**dass** an jedes Pol-Teilstück (41, 42) ein Leiterstück (49) angesetzt ist, mit dem der Übergang von den Stromanschlüssen der Pol-Teilstücke auf die im Dreieck angeordneten Stromzuführungen (50) erfolgt.

10. Einphasig gekapselter Hochspannungs-Leistungsschalter in horizontal liegender Bauweise,
bei dem der innerhalb eines rohrförmigen Schaltergehäuses angeordnete Leistungsschalter-Pol aus zwei gegenüber dem Schaltergehäuse isoliert angeordneten Pol-Teilstücken besteht, von denen das eine das bewegbare Kontaktstück und das andere das feststehende Kontaktstück trägt,
bei dem dem bewegbaren Kontaktstück des Leistungsschalter-Poles eine außerhalb des Schaltergehäuses an dessen Mantelfläche angeordnete und an einem Montageflansch befestigte Antriebseinrichtung zugeordnet ist, die innerhalb des Schaltergehäuses über ein Hebelgetriebe an das bewegbare Kontaktstück angekoppelt ist,
bei dem an den stirnseitigen Enden des Schaltergehäuses horizontal anschließende Anbaugehäuse vorgesehen sind, durch welche die Stromzuführungen (50) zu dem Leistungsschalter-Pol hindurchgeführt sind,
bei dem jedes Pol-Teilstück des Leistungsschalter-Poles über jeweils einen Isolierstützer am Mantel des rohrförmigen Schaltergehäuses abgestützt ist,
bei dem der Isolierstützer für das das bewegbare Kontaktstükke enthaltende Pol-Teilstück als Durchführung für ein mit der Antriebseinrichtung verbundenes Koppelelement des Hebelgetriebes ausgebildet ist,
bei dem jedes Hebelgetriebe einen zweiarmigen Umlenkhebel aufweist, dessen Drehlager über den Isolierstützer am Mantel des Schaltergehäuses abgestützt ist, und
bei dem das Koppelelement an den einen Hebelarm des zweiarmigen Umlenkhebels angelenkt ist, während der andere Hebelarm des Umlenkhebels über ein schwenkbar gelagertes Koppelelement an ein axial geführtes Koppelelement angelenkt ist und das axial geführte Koppelelement in Bewegungsrichtung des bewegbaren Kontaktstückes gleitend geführt und an das bewegbare Kontaktstück angekoppelt ist.

11. Hochspannungs-Leistungsschalter nach Anspruch 10
**dadurch gekennzeichnet,**
**dass** das das bewegbare Kontaktstück enthaltende Pol-Teilstück als Gehäuse ausgebildet ist, das den Umlenkhebel und das axial geführte Koppelelement umgibt und in dessen Wandung der jeweilige Umlenkhebel gelagert ist und das auf den zugehörigen Isolierstützer aufgesetzt ist.

12. Hochspannungs-Leistungsschalter nach einem der Ansprüche 10 oder 11,
**dadurch gekennzeichnet,**
**dass** das das feststehendes Kontaktstück enthaltende Pol-Teilstück gleichartig wie das ein bewegbares Kontaktstück enthaltenden Pol-Teilstück ausgebildet ist.

13. Hochspannungs-Leistungsschalter nach einem der Ansprüche 10 bis 12,
**dadurch gekennzeichnet,**
**dass** die Pol-Teilstücke des Leistungsschalter-Poles mittels eines isolierenden Abstandhalters mechanisch miteinander verbunden sind, wobei der isolierende Abstandhalter aus wenigstens einer parallel zur Achse der Pol-Teilstücke verlaufenden Stange (43) besteht.

## Claims

1. Three-phase-encapsulated high-voltage circuit breaker with a horizontal configuration,
in which each of the three circuit breaker poles (40) which are arranged side by side within a tubular switch enclosure comprises two pole elements which are arranged insulated from the switch enclosure (11) and of which the one pole element (41), which is supported in an insulating manner on the switch enclosure, is fitted with the moving contact piece (6), and the other pole element (42) is fitted with the stationary contact piece (7)
in which, furthermore, the moving contact pieces of the circuit breaker poles have an associated common drive device (22, 26), which is arranged outside the switch enclosure and, inside the switch enclosure, is coupled via separate lever drives (29', 31, 3, 32, 33, 34, 35) to the moving contact pieces,
and in which surface-mounted enclosures (12, 13) are provided in the region of the ends of the switch enclosure, through which surface-mounted enclosures the current feeders (50) to the circuit breaker poles are passed,
**characterized**
**in that** the two ends of the switch enclosure are each provided with a connecting flange (14, 15) for horizontal connection of a surface-mounted enclosure (12, 13),
**in that** the drive device (22, 26) is arranged on the casing surface of the switch enclosure (11) and is attached to a mounting flange (21) in the casing region of the switch enclosure,
**in that** each pole element (41, 42) of a circuit breaker pole is supported via in each case one insulating post (44, 45) on the casing (10) of the tubular switch enclosure (11),
and **in that** the insulating posts (44) for the pole elements (41) which contain the moving contact pieces are in the form of bushings for coupling elements (32), which are connected to the drive device, of the lever drive,
in which case each lever drive has a two-armed direction-changing lever (33), whose rotary bearing (33) is supported via the insulating post (44) on the casing (10) of the switch enclosure (11).

2. High-voltage circuit breaker according to Claim 1, in which each surface-mounted enclosure (12, 13) has a first connecting flange (16, 17) facing the switch enclosure (11) and a second connecting flange (18, 19) facing away from the switch enclosure (11),
**characterized**
**in that** the second connecting flange (18, 19) of at least one of the two surface-mounted enclosures has a diameter (d) which is less than the diameter (D) of the first connecting flange (16, 17),
and **in that** this surface-mounted enclosure (12, 13) is in the form of a current transformer module.

3. High-voltage circuit breaker according to Claim 1 or 2,
**characterized**
**in that** the insulating posts (44) for the pole elements which contain the moving contact pieces are fitted to a transverse member (48) which is supported on the casing (10) of the switch enclosure (11) in the region of the mounting flange (21).

4. High-voltage circuit breaker according to Claim 3,
**characterized**
**in that** the coupling elements (32) of the lever drives are connected in a hinged manner, underneath the transverse member (48), to a yoke (3), which is connected via a drive rod (31) to the drive device (26, 27, 28, 29).

5. High-voltage circuit breaker according to Claim 4,
**characterized**
**in that** each coupling element (32) is connected in a hinged manner to the one lever arm of the associated two-armed direction-changing lever (33),
and **in that** the other lever arm of the direction-changing lever (33) is connected in a hinged manner via a coupling element (34), which is mounted such that is can pivot, to an axially guided coupling element (35), in which case the axially guided coupling element (35) is guided such that it can slide (37) in the movement direction of the moving contact piece (6), and is coupled to the moving contact piece (6).

6. High-voltage circuit breaker according to Claim 5,
**characterized**
**in that** each pole element (41) which contains a moving contact piece is in the form of an enclosure, which surrounds the direction-changing lever (33) and the axially guided coupling element (34) and in whose wall (53) the respective direction-changing lever is mounted (39), and which is fitted on the associated insulating post (44).

7. High-voltage circuit breaker according to one of Claims 1 to 6,
**characterized**
**in that** the pole elements (42) which contain a stationary contact piece (7) are of identical construction to the pole elements (41) which contain a moving contact piece (6) .

8. High-voltage circuit breaker according to one of Claims 1 to 7,
**characterized**
**in that** the pole elements (41, 42) of one circuit breaker pole (40) are mechanically connected to one another by means of an insulating spacer, in which case the insulating spacer comprises at least one rod (43) which runs parallel to the axis of the pole elements.

9. High-voltage circuit breaker according to one of Claims 1 to 8,
**characterized in that** a conductor element (49) is fitted to each pole element (41, 42), and is used to provide the transition from the current connections of the pole elements to the current feeders (50), which are arranged in a triangular shape.

10. Single-phase-encapsulated high-voltage circuit breaker with a horizontal configuration,
in which the circuit breaker pole which is arranged inside a tubular switch enclosure comprises two pole elements which are arranged insulated from the switch enclosure, and one of which is fitted with the moving contact piece while the other is fitted with the stationary contact piece,
in which the moving contact piece of the circuit breaker pole has an associated drive device, which is arranged outside the switch enclosure, on its casing surface, is attached to a mounting flange and is coupled, inside the switch enclosure, via a lever drive to the moving contact piece,
in which horizontally adjacent surface-mounted enclosures are provided on the ends of the switch enclosure, through which surface-mounted enclosures the current feeders (50) to the circuit breaker pole are passed,
in which each pole element of the circuit breaker pole is supported via in each case one insulating post on the casing of the tubular switch enclosure,
in which the insulating post for the pole element which contains the moving contact pieces is in the form of a bushing for a coupling element, which is connected to the drive device, of the lever drive,
in which each lever drive has a two-armed direction-changing lever whose rotary bearing is supported via the insulating post on the casing of the switch enclosure, and
in which the coupling element is connected in a hinged manner to the one lever arm of the two-armed direction-changing lever, while the other lever arm of the direction-changing lever is connected in a hinged manner via a coupling element, which is mounted such that it can pivot, to an axially guided coupling element, and the axially guiding coupling element is guided such that it can slide in the movement direction of the moving contact piece, and is coupled to the moving contact piece.

11. High-voltage circuit breaker according to Claim 10,
**characterized**
**in that** the pole element which contains the moving contact piece is in the form of an enclosure which surrounds the direction-changing lever and the axially guided coupling element, and in whose wall the respective direction-changing lever is mounted, and which is fitted to the associated insulating post.

12. High-voltage circuit breaker according to one of Claims 10 or 11,
**characterized**
**in that** the pole element which contains the stationary contact piece is of identical construction to the pole element which contains a moving contact piece.

13. High-voltage circuit breaker according to one of Claims 10 to 12,
**characterized in that** the pole elements of the circuit breaker pole are mechanically connected to one another by means of an insulating spacer in which case the insulating spacer comprises at least one rod (43) which runs parallel to the axis of the pole elements.

## Revendications

1. Disjoncteur haute tension encapsulé pour courant triphasé à construction horizontale,
dans lequel chacun des trois pôles (40) du disjoncteur disposés côte à côte dans un coffret tubulaire de disjoncteur est constitué de deux sous-pièces polaires disposées de manière isolée par rapport au coffret (11) du disjoncteur, dont l'une des sous-pièces (41) polaires s'appuyant de manière isolée sur le coffret du disjoncteur porte la pièce (6) mobile de contact, et dont l'autre sous-pièce (42) polaire porte la pièce (7) fixe de contact,
dans lequel, en outre, il est associé aux pièces mobiles de contact des pôles du disjoncteur un dispositif (22, 26) commun d'entraînement disposé à l'extérieur du coffret du disjoncteur et couplé à l'intérieur du coffret du disjoncteur aux pièces mobiles de contact par des transmissions (29', 31, 3, 32, 33, 34, 35) séparées à levier,
et dans lequel il est prévu, dans la zone des extrémités frontales du coffret du disjoncteur, des coffrets (12, 13) d'adossement à travers lesquels les entrées (50) de courant passent vers les pôles du disjoncteur,
**caractérisé**
**en ce que** les deux extrémités se trouvant du côté frontal du coffret du disjoncteur sont munies respectivement d'une bride (14, 15) de raccordement pour le raccordement horizontal d'un coffret (12, 13) d'adossement,
**en ce que** le dispositif (22, 26) d'entraînement est disposé sur la surface latérale du coffret (11) du disjoncteur et est fixé à une bride (21) de montage de la zone de la surface latérale du coffret du disjoncteur,
**en ce que** chaque sous-pièce (41, 42) polaire d'un pôle du disjoncteur s'appuie par, respectivement, un appui (44, 45) isolant sur la surface (10) latérale du coffret (11) tubulaire du disjoncteur,
et **en ce que** les appuis (44) isolants des sous-pièces (41) polaires contenant les pièces mobiles de contact sont constitués sous la forme de traversées pour des éléments (32), reliées au dispositif d'entraînement, des transmissions à levier,
chaque transmission à levier comportant un levier (33) de renvoi à deux bras dont le palier tournant s'appuie, par l'appui (44) isolant, sur la surface (10) latérale du coffret (11) de disjoncteur.

2. Disjoncteur haute tension suivant la revendication 1, dans lequel chaque coffret (12, 13) d'adossement comprend une première bride (16, 17) de raccordement tournée vers le coffret (11) du disjoncteur et une deuxième bride (18, 19) de raccordement éloignée du coffret (11) du disjoncteur, **caractérisé**
**en ce que** la deuxième bride (18, 19) de raccordement d'au moins l'un des deux coffrets d'adossement a un diamètre (d) qui est plus petit que le diamètre (D) de la première bride (16, 17) de raccordement,
et **en ce que** ce coffret (12, 13) d'adossement est constitué sous la forme d'un module convertisseur de courant.

3. Disjoncteur haute tension suivant la revendication 1 ou 2, **caractérisé en ce que** les appuis (44) isolants des sous-pièces polaires contenant les pièces mobiles de contact sont posés sur une traverse (48) qui s'appuie dans la zone de la bride (21) de montage sur la surface (10) latérale du coffret (11) du disjoncteur.

4. Disjoncteur haute tension suivant la revendication 3, **caractérisé en ce que** les éléments (32) de couplage des transmissions à levier sont articulés en dessous de la traverse (48) à une culasse (33) qui est reliée au dispositif (26, 27, 28, 29) d'entraînement par une biellette (31) d'entraînement.

5. Disjoncteur haute tension suivant la revendication 4, **caractérisé en ce que** chaque élément (32) de couplage est articulé à l'un des bras du levier (33) de renvoi correspondant à deux bras et **en ce que** l'autre bras du levier (33) de renvoi est articulé par un élément (34) de couplage monté basculant à un élément (35) de couplage guidé axialement, l'élément (35) de couplage guidé axialement étant guidé à glissement (37) dans la direction de déplacement de la pièce (6) mobile de contact et étant accouplé à la pièce (6) mobile de contact.

6. Disjoncteur haute tension suivant la revendication 5, **caractérisé en ce que** chaque sous-pièce (41) polaire comportant une pièce mobile de contact est constituée sous la forme d'un boîtier qui entoure le levier (33) de renvoi et l'élément (35) de couplage guidé axialement et dans la paroi (53) duquel est monté le levier de renvoi respectif (39) et qui s'appuie sur l'appui (44) isolant associé.

7. Disjoncteur haute tension suivant l'une des revendications 1 à 6, **caractérisé en ce que** les sous-pièces (42) polaires comportant une pièce (7) fixe de contact sont constituées de la même façon que les sous-pièces (41) polaires comportant une pièce (6) mobile de contact.

8. Disjoncteur haute tension suivant l'une des revendications 1 à 7, **caractérisé en ce que** les sous-pièces (41, 42) polaires d'un pôle (40) du disjoncteur sont reliées entre elles mécaniquement au moyen d'une entretoise isolante, l'entretoise isolante étant constituée d'au moins une barre (43) s'étendant parallèlement à l'axe des sous-pièces polaires.

9. Disjoncteur haute tension suivant l'une des revendications 1 à 8, **caractérisé en ce qu'**il est appliqué à chaque sous-pièce (41, 42) polaire une pièce (49) conductrice par laquelle s'effectue la transition des bornes de courant des sous-pièces polaires aux entrées (50) de courant disposées en triangle.

10. Disjoncteur haute tension encapsulé monophasé à construction horizontale,
dans lequel le pôle du disjoncteur disposé à l'intérieur d'un coffret tubulaire du disjoncteur est constitué de deux sous-pièces polaires disposées de manière isolée par rapport au coffret du disjoncteur et dont l'une porte la pièce mobile de contact et l'autre la pièce fixe de contact,
dans lequel il est associé à la pièce mobile de contact du pôle du disjoncteur un dispositif d'entraînement disposé à l'extérieur du coffret du disjoncteur sur sa surface latérale et fixé à une bride de montage, dispositif d'entraînement qui est couplé à l'intérieur du coffret du disjoncteur par une transmission à levier à la pièce mobile de contact,
dans lequel il est prévu aux extrémités se trouvant du côté frontal du coffret du disjoncteur des coffrets d'adossement qui se raccordent horizontalement et à travers lesquels passent les entrées (50) de courant allant au pôle du disjoncteur,
dans lequel chaque sous-pièce polaire du pôle du disjoncteur s'appuie par, respectivement, un appui isolant sur la surface latérale du coffret tubulaire du disjoncteur,
dans lequel l'appui isolant de la sous-pièce polaire comprenant la pièce mobile de contact est réalisé sous la forme d'une traversée pour un élément de couplage, reliée au dispositif d'entraînement, de la transmission à levier,
dans lequel chaque transmission à levier comprend un levier de renvoi à deux bras dont le palier de rotation s'appuie par l'intermédiaire de l'appui isolant sur la surface latérale du coffret du disjoncteur et
dans lequel l'élément de couplage est articulé à l'un des bras du levier de renvoi à deux bras, tandis que l'autre bras du levier de renvoi est articulé à un élément de couplage guidé axialement par l'intermédiaire d'un élément de couplage monté basculant, et l'élément de couplage guidé axialement est guidé à glissement dans la direction de déplacement de la pièce mobile de contact et est couplé à la pièce mobile de contact.

11. Disjoncteur haute tension suivant la revendication 10, **caractérisé en ce que** la sous-pièce polaire comprenant la pièce mobile de contact est constituée en boîtier qui entoure le levier de renvoi et l'élément de couplage guidé axialement et dans la paroi duquel est monté le levier de renvoi respectif et qui s'applique à l'appui isolant associé.

12. Disjoncteur haute tension suivant l'une des revendications 10 ou 11, **caractérisé en ce que** la sous-pièce polaire comprenant la pièce fixe de contact est constituée de la même façon que la sous-pièce polaire comprenant la pièce mobile de contact.

13. Disjoncteur haute tension suivant l'une des revendications 10 à 12, **caractérisé en ce que** les sous-pièces polaires du pôle du disjoncteur sont reliées mécaniquement entre elles par une entretoise isolante, l'entretoise isolante étant constituée d'au moins une biellette s'étendant parallèlement à l'axe des sous-pièces polaires.
